# EUROPEAN PATENT SPECIFICATION

(11) **EP 2 561 986 B1**
(45) Date of publication and mention of the grant of the patent: **03.08.2016**
(21) Application number: 11771878.3
(22) Date of filing: 07.04.2011
(51) Int. Cl.: B32B 27/36, C08J 7/04, C09D 175/04

(54) **LAMINATED POLYESTER FILM**
LAMINIERTER POLYESTERFILM
FILM POLYESTER STRATIFIÉ

(30) Priority: 22.04.2010 JP 2010098408
(43) Date of publication of application: 27.02.2013
(73) Proprietor: Mitsubishi Plastics, Inc., Tokyo 100-8252 (JP)
(72) Inventor: HIRAKI, Toshihiro, Maibara-shi Shiga 521-0234 (JP); KODA, Toshihiro, Maibara-shi Shiga 521-0234 (JP); FUJITA, Masato, Maibara-shi Shiga 521-0234 (JP)
(74) Representative: Ter Meer Steinmeister & Partner
(86) International application number: PCT/JP2011/058794
(87) International publication number: WO 2011/132542

(56) References cited:
- EP-A1- 1 942 132
- EP-A2- 0 342 826
- EP-A2- 0 884 348
- WO-A1-2009/025079
- WO-A1-2009/113412
- WO-A1-2010/041408
- DE-A1- 10 247 845
- DE-A1- 10 247 848
- JP-A- 10 139 905
- JP-A- 2001 341 264
- JP-A- 2002 338 718
- JP-A- 2008 045 072
- JP-A- 2008 133 457
- JP-A- 2009 233 507

## Description

### TECHNICAL FIELD

The present invention relates to a polyester film having a coating layer which can exhibit excellent easy-bonding property and weather-resistant bonding property when bonded to various topcoat agents.

### BACKGROUND ART

Biaxially stretched polyester films have been extensively used in various applications including not only packaging materials, printing plate materials, display materials, transfer materials, building materials and window-attaching materials, but also membrane switches, antireflective films for flat displays, optical films such as diffusion sheets and prism sheets, transparent touch panels, etc., because they are excellent in transparency, dimensional stability, mechanical properties, heat resistance, electric properties, gas-barrier property, chemical resistance, etc. However, in these applications, when the other materials are coated and laminated on the polyester films, adhesion therebetween tends to be deteriorated according to the materials used.

As one of methods for improving a bonding property of the biaxially stretched polyester film, there is known the method in which various resins are applied onto a surface of the polyester film to provide a coating layer having an easy-bonding property (Patent Documents 1 and 2).

However, the known easy-bonding coating layer still tends to be insufficient in bonding property according to kinds of topcoat layers provided thereon. For example, when a so-called solvent-free type UV-curable coating material is used as the topcoat agent, the solvent-free topcoat agent tends to be deteriorated in penetration into the easy-bonding layer and therefore in swelling effect as compared to solvent-based topcoat agents, so that adhesion therebetween tends to be insufficient.

To solve the above problems, there has been proposed, for example, the method of providing an easy-bonding layer having a specific composition on a polyester film to impart an excellent bonding property thereto (Patent Documents 3 to 6). However, in recent years, the polyester films have been increasingly used in the applications such as automobiles and building materials, in particular, when used in the outdoor applications, there is an increasing demand for polyester films having a high weather-resistant bonding property as a property capable of maintaining a bonding property for a long period of time. However, the conventional easy-bonding coating layers have still failed to exhibit a sufficient effect of attaining such a high weather-resistant bonding property.

### Prior Art Documents

### Patent Documents

Patent Document 1: Japanese Patent Application Laid-Open (KOKAI) No. 2002-53687
Patent Document 2: Japanese Patent Application Laid-Open (KOKAI) No. 11-286092
Patent Document 3: Japanese Patent Application Laid-Open (KOKAI) No. 2009-220376
Patent Document 4: Japanese Patent Application Laid-Open (KOKAI) No. 2009-221359
Patent Document 5: Japanese Patent Application Laid-Open (KOKAI) No. 2010-13550
Patent Document 6: Japanese Patent Application Laid-Open (KOKAI) No. 2009-233507

### DISCLOSURE OF THE INVENTION

### Problems to be Solved by the Invention

The present invention has been accomplished to solve the above conventional problems. An object of the present invention is to provide a polyester film which includes a coating layer capable of exhibiting excellent easy-bonding property and weather-resistant bonding property to topcoat agents.

### Means for Solving Problems

As a result of the present inventors' earnest study in view of the above problems, it has been found that these problems can be solved by providing a coating layer comprising a specific compound on a polyester film. The present invention has been attained on the basis of this finding.

That is, in an aspect of the present invention, there is provided a laminated polyester film comprising a polyester film and a coating layer which is formed of a coating solution comprising (A) a compound having an isocyanate-based reactive group and a urethane bond, (B) a urethane resin and (C) at least one crosslinking agent as defined in claim 1.

### EFFECT OF THE INVENTION

In accordance with the present invention, there can be provided a laminated polyester film comprising a coating layer which is excellent in easy-bonding property and weather-resistant bonding property to topcoat agents. Therefore, the present invention has a high industrial value.

### PREFERRED EMBODIMENTS FOR CARRYING OUT THE INVENTION

The present invention is described in more detail hereinafter.

The base film of the laminated polyester film according to the present invention is formed of a polyester. Such a polyester may be produced by melt-polycondensing a dicarboxylic acid such as terephthalic acid, isophthalic acid, 2,6-naphthalenedicarboxylic acid, adipic acid, sebacic acid, 4,4'-diphenyl dicarboxylic acid and 1,4-cyclohexyl dicarboxylic acid or an ester of these acids, with a glycol such as ethylene glycol, diethylene glycol, triethylene glycol, propylene glycol, 1,4-butanediol, neopentyl glycol and 1,4-cyclohexane dimethanol. The polyesters obtained from these acid components and glycol components may be produced by optionally using any ordinary methods. For example, there may be adopted the method in which a lower alkyl ester of an aromatic dicarboxylic acid and a glycol are subjected to transesterification reaction, or the aromatic dicarboxylic acid and the glycol are subjected to direct esterification reaction, to thereby obtain substantially a bisglycol ester of the aromatic dicarboxylic acid or an oligomer thereof, and then the resulting product is heated under reduced pressure to subject the product to polycondensation reaction. Also, an aliphatic dicarboxylic acid may be copolymerized with the above components of the polyester according to the aimed applications thereof.

Typical examples of the polyesters used in the present invention include polyethylene terephthalate, polyethylene-2,6-naphthalate and poly-1,4-cyclohexanedimethylene terephthalate as well as polyesters obtained by copolymerizing the above acid components or glycol components therewith. These polyesters may also comprise other components or additives, if required.

For the purposes of ensuring a good traveling property of the film and preventing occurrence of flaws in the film, particles may be compounded in the polyester film of the present invention. Examples of the particles include inorganic particles such as particles of silica, calcium carbonate, magnesium carbonate, calcium phosphate, kaolin, talc, aluminum oxide, titanium oxide, alumina, barium sulfate, calcium fluoride, lithium fluoride, zeolite and molybdenum sulfide, organic particles such as crosslinked polymer particles and calcium oxalate as well as deposited particles obtained during the process for production of the polyester.

The particle diameter and content of the particles used in the polyester film may be determined depending upon the applications and objects of the resulting film. The average particle diameter of the particles used in the present invention is usually in the range of 0.01 to 5.0 µm. When the average particle diameter of the particles is more than 5.0 µm, the surface roughness of the obtained film tends to be too coarse, or the particles tend to fall off from the surface of the film. When the average particle diameter of the particles is less than 0.01 µm, the particles may fail to impart a sufficient easy-slipping property to the polyester film owing to a very small surface roughness of the film. The content of the particles in the polyester film is usually in the range of 0.0003 to 1.0% by weight and preferably 0.0005 to 0.5% by weight based on the weight of the polyester. When the content of the particles in the polyester film is less than 0.0003% by weight, the resulting film tends to be insufficient in easy-slipping property. On the other hand, when the content of the particles in the polyester layer is more than 1.0% by weight, the resulting film tends to be insufficient in transparency. Meanwhile, when it is intended to ensure specific properties of the film, in particular, transparency, smoothness or flatness, etc., the polyester film may comprise substantially no particles. In addition, various additives such as stabilizers, lubricants and antistatic agents may also be appropriately added to the film.

The polyester film used in the present invention may be produced by using any conventionally known film-forming methods without any particular limitation. For example, a melt-extruded sheet is first stretched at a temperature of 70 to 145°C and a stretch ratio of 2 to 6 times in one direction thereof by a roll stretching method to obtain a monoaxially stretched polyester film. Then, the thus obtained monoaxially stretched film is introduced into a tenter and stretched therein at a temperature of 80 to 160°C and a stretch ratio of 2 to 6 times in the direction perpendicular to the previous stretching direction. The resulting stretched sheet is then heat-treated at a temperature of 150 to 250°C for a period of 1 s to 600 s to thereby obtain a biaxially stretched film. Further, upon the heat treatment, in the heat-treating zone and/or a cooling zone located at an outlet of the heat-treating zone, the resulting film is preferably subjected to relaxation by 0.1 to 20% in longitudinal and/or lateral directions thereof.

The polyester film used in the present invention may have either a single layer structure or a multi-layer structure. In the polyester film having a multi-layer structure, surface layers and an inner layer thereof or both the surface layers or the respective layers may be formed of different kinds of polyesters from each other according to the applications or objects of the resulting film.

The polyester film used in the present invention is provided on at least one surface thereof with the coating layer. However, as a matter of course, it should be noted that the polyester film having the other coating layer or functional layer on a surface thereof opposite to the surface on which the above coating layer is provided, is also involved in the scope of the present invention.

In the present invention, the coating layer may be formed by various conventionally known coating methods. Among these methods, there may be suitably used a so-called in-line coating method in which a coating layer is formed on a polyester film during production of the film, in particular, a coating and stretching method in which a stretching step is conducted after the above coating step.

In the in-line coating method, the coating step is conducted during the process of producing the polyester film. More specifically, the in-line coating method is a method in which the polyester film is subjected to a coating step at an optional stage during a period of from melt-extrusion of a raw polyester through biaxial stretching and then heat-fixing thereof up to taking-up of the resulting film. Usually, either a substantially amorphous unstretched sheet obtained after rapidly cooling a molten polyester, a monoaxially stretched film obtained by stretching the unstretched sheet in a length direction (longitudinal direction) thereof, or a biaxially stretched film before being heat-fixed is subjected to the coating step. In particular, as an excellent coating and stretching method, there is used a method in which after subjecting the monoaxially stretched film to the coating step, the resulting coated film is subjected to stretching in a lateral direction thereof.

The above method has an advantage of reduction in production costs because formation of the film and provision of the coating layer can be conducted at the same time. Further, in the above method, since the stretching step is conducted after the coating step, the resulting film is stabilized in adhesion performance thereof owing to formation of a thin uniform coating layer. In addition, in the above method, the polyester film before being subjected to biaxial stretching is first coated with an easy-bonding resin layer, and then both the film and the coating layer are stretched together at the same time, so that the based film and the coating layer are strongly adhered to each other.

Also, when subjecting the polyester film to biaxial stretching, the polyester film is stretched in a lateral direction thereof while gasping the end portions of the film by a tenter. Thus, since the polyester film is restrained in both a longitudinal direction and a lateral direction thereof, the film can be exposed to a high temperature while maintaining its flatness without occurrence of wrinkles, etc., upon the heat-fixing. Therefore, the heat treatment after the coating step can be conducted at such a high temperature as being unusable in the other conventional methods. As a result, the obtained coating layer can be enhanced in film-forming property, and the coating layer and the polyester film can be strongly adhered to each other. The uniformity of the coating layer, the enhanced film-forming property and the strong adhesion between the coating layer and the polyester film frequently result in production of an easy-bonding polyester film having preferred properties.

In this case, the coating solution used in the above method is suitably in the form of a water dispersion from the standpoints of handling, working environments and safety. However, the coating solution may also comprise an organic solution as far as the coating solution comprises water as a main medium.

Next, the coating layer provided on the film according to the present invention is described.

The coating solution used for providing the coating layer in the present invention comprises (A) a compound having an isocyanate-based reactive group and a urethane bond, (B) a urethane resin and (C) at least one crosslinking agent.

In the present invention, the compound (A) having an isocyanate-based reactive group and a urethane bond means a compound comprising at least one isocyanate-based reactive group and at least one urethane bond in a molecule thereof. For example, the compound (A) may be selected from the group consisting of a compound obtained by reacting a hydroxyl group-containing compound with a diisocyanate, a compound obtained by reacting a hydroxyl group-containing compound with a polyisocyanate, and a compound obtained by reacting a polyol with a polyisocyanate, and is in the form of a compound having an isocyanate group unreacted with a hydroxyl group at a terminal end thereof.

Meanwhile, the compound (A) may also be a so-called blocked isocyanate in which a terminal isocyanate group thereof is protected with a blocking agent. In the preferred embodiment of the present invention, from the viewpoint of a good stability of the coating solution, etc., the blocked isocyanate is used as the compound (A). The compound (A) may also be a urethane resin produced by reacting a polyol with an excessive amount of polyisocyanate which has an isocyanate group at a terminal end thereof. Upon synthesis of the urethane resin, there may be used the same raw material components as used for production of the below-mentioned urethane resin (B).

In the present invention, a compound having a core/shell structure which is produced by the method as described in Japanese Patent Application Laid-Open (KOKAI) No. 2008-45072 is used as the compound (A). More specifically, resin emulsion particles having a core/shell structure comprising the compound (A) as a core whose outside surface is covered with the other resin are used as the compound (A) of the present invention. The use of the thus configured resin as the compound (A) is preferred from the viewpoints of a good stability of the coating solution and a good bonding property of the resulting coating layer. In addition, resin particles obtained by using the below-mentioned urethane resin as the resin for a shell portion thereof are used as the urethane resin (B) of the present invention.

When using the compound (A) in the form of a blocked isocyanate obtained by blocking an isocyanate group thereof, the blocking agent used therefor is not particularly limited, and there may be appropriately used at least one blocking agent selected from conventionally known blocking agents. Examples of the blocking agent usable in the present invention include phenol-based compounds, alcohol-based compounds, active methylene-based compounds, mercaptan-based compounds, acid amide-based compounds, lactam-based compounds, acid imide-based compounds, imidazole-based compounds, urea-based compounds, oxime-based compounds and amine-based compounds.

Specific examples of the blocking agent used in the present invention include phenol-based compounds such as phenol, cresol and ethyl phenol; alcohol-based compounds such as propylene glycol monomethyl ether, ethylene glycol, benzyl alcohol, methanol and ethanol; active methylene-based compounds such as dimethyl malonate and acetyl acetone; mercaptan-based compounds such as butyl mercaptan and dodecyl mercaptan; acid amide-based compounds such as acetanilide and acetic acid amide; lactam-based compounds such as ε-caprolactam and δ-valerolactam; acid imide-based compounds such as succinimide and maleimide; oxime-based compounds such as acetaldoxime, acetone oxime and methyl ethyl ketone oxime; amine-based compounds such as diphenyl aniline, aniline and ethylene imine; and sodium sulfite. In particular, from the viewpoint of a good weather-resistant bonding property of the resulting coating layer, the compound (A) used in the present invention preferably has a tetra- to deca-methylene structure (number of carbon atoms: 4 to 10) in a skeletal structure of the resin. Meanwhile, the tetra- to deca-methylene structure as used herein may be in the form of a derivative of the tetra- to deca-methylene structure obtained by modifying the structure by introducing a methyl group into a side chain thereof.

In the present invention, the compound (A) may be used alone or in combination of any two or more kinds thereof.

The urethane resin (B) used in the present invention is a resin synthesized from a polyisocyanate component and a polyol component by any known synthesis methods for production of aqueous urethane resins. The thus synthesized resin may be either cationic, anionic or nonionic. Upon synthesis of the urethane resin used in the present invention, as the polyisocyanate component, there may be used ordinary raw materials for polyurethane resins. In addition, from the viewpoint of preventing occurrence of yellow discoloration of the coating layer owing to irradiation with an ultraviolet ray, aliphatic isocyanates or alicyclic isocyanates are preferably used as compared to aromatic isocyanates, although not particularly limited thereto.

Specific examples of the aliphatic isocyanates or alicyclic isocyanates include aliphatic isocyanates such as tetramethylene diisocyanate, hexamethylene diisocyanate, lysine diisocyanate, 2-methylpentane-1,5-diisocyanate, 3-methylpentane-1,5-diisocyanate, 2,2,4-trimethylhexamethylene-1,6-diisocyanate and 2,4,4-trimethylhexamethylene-1,6-diisocyanate; and alicyclic diisocyanates such as isophorone diisocyanate, cyclohexyl diisocyanate, hydrogenated xylylene diisocyanate, hydrogenated diphenyl methane diisocyanate and hydrogenated trimethyl xylylene diisocyanate. These diisocyanates may be used alone or in the form of a mixture of any two or more thereof.

Further, there may also be used adduct-modified products, carbodiimide-modified products, allophanate-modified products, biuret-modified products, uretdione-modified products, uretimine-modified products, isocyanurate-modified products of the above polyisocyanates, such as allophanate-modified polyisocyanates produced from hexamethylene diisocyanate and a monool having 1 to 6 carbon atoms.

Examples of the aromatic diisocyanates include 2,4-tolylene diisocyanate, 2,6-tolylene diisocyanate, xylylene-1,4-diisocyanate, xylylene-1,3-diisocyanate, 4,4'-diphenyl methane diisocyanate, 2,4'-diphenyl methane diisocyanate, 4,4'-diphenyl ether diisocyanate, 2,2'-diphenyl propane-4,4'-diisocyanate, 3,3'-dimethyl diphenyl methane-4,4'-diisocyanate, m-phenylene diisocyanate, p-phenylene diisocyanate and naphthylene-1,4-diisocyanate.

As the polyol for synthesis of such a urethane resin, there may be used polyester polyols, polyester amide polyols, polyether polyols, polyetherester polyols, polycarbonate polyols, acrylic polyols, polyalkylene polyols, polyolefin polyols. These polyols may be used in combination with each other. In addition, these polyol components usually have a number-average molecular weight of 300 to 5000 in terms of a polystyrene as measured by gel permeation chromatography (GPC).

Upon synthesis of the urethane resin (B) used in the present invention, a chain extender is used. As the chain extender, diamines and polyamines are used because they can readily undergo a crosslinking reaction with a high reactivity and therefore can provide advantageous properties such as water resistance, solvent resistance and stain resistance.

Specific examples of the amine compounds include diamines such as ethylenediamine and isophorone diamine, and polyamines represented by the formula: H₂N-(C₂H₄NH)ₙ-C₂H₄NH₂ wherein n = 1 to 8, such as diethylenetriamine, triethylenetetramine, tetraethylenepentamine and pentaethylenehexamine.

In order to allow the urethane resin (B) used in the present invention to exhibit an especially high weather-resistant bonding property, the urethane resin (B) has a tetra- to deca-methylene structure in a skeletal structure thereof. The urethane resin (B) having a tetra- to deca-methylene structure may be obtained, for example, by using a polyisocyanate component, a polyol component, a chain extender which comprises the tetra- to deca-methylene structure as a part of constitutional components thereof. In order to obtain a urethane resin having excellent properties, the use of polyols having a tetra- to deca-methylene structure is made from the industrial viewpoints.

Also, the polyols having a tetra- to deca-methylene structure may also be in the form of a derivative thereof obtained by modifying the tetra- to deca-methylene structure, for example, by introducing a methyl group into a side chain thereof.

The glass transition point of the urethane resin (B) used in the present invention (hereinafter occasionally referred to merely as "Tg") is preferably not higher than 10°C, more preferably not higher than 0°C, and still more preferably not higher than -10°C. When using the urethane resin (B) whose glass transition point lies within the above specified range, the resulting coating layer can readily exhibit a good weather-resistant bonding effect. When Tg of the urethane resin (B) is higher than 10°C, the resulting coating layer tends to be insufficient in easy-bonding property. The "Tg" as used herein means a temperature of a dried film of the urethane resin (B) at which a dynamic viscoelasticity E" as measured becomes maximum.

The compound (A) and the urethane resin (B) used in the present invention may be dispersed or dissolved in a solvent as a medium, and is preferably dispersed or dissolved in water as the medium. In order to disperse or dissolve the polyurethanes in water, polyurethane resins of a self-emulsifiable type or a water-soluble type which are obtained by introducing a hydrophilic group or an ionic group into the polyurethane resins are used. Among these polyurethane resins, in particular, self-emulsifiable type polyurethane resins which are hydrophilized by introducing a nonionic hydrophilic group such as an ethyleneoxide chain into a skeleton of the polyurethane resins or ionomerized by introducing an ionic group into a skeleton of the polyurethane resins are used because they are excellent in storage stability of the coating solution as well as in water resistance and bonding property of the resulting coating layer.

Examples of the ionic group to be introduced into the polyurethane resins include various groups such as a carboxyl group, a sulfonic acid group, a phosphoric acid group, and a quaternary ammonium group. Among these ionic groups, preferred are a carboxyl group and a quaternary ammonium group.

As the method of introducing a carboxyl group into the urethane resin, there may be used various methods which may be carried out in respective stages of the polymerization reaction. For example, there may be used the method in which a carboxyl group-containing resin is used as a comonomer component upon synthesis of a prepolymer, or the method in which a carboxyl group-containing component is used as one of the components such as the polyol, the polyisocyanate, the chain extender. In particular, there is preferably used the method in which a carboxyl group-containing diol is used to introduce a desired amount of a carboxyl group into the urethane resins by suitably adjusting an amount of the diol charged.

For example, the diol used in the polymerization for production of the urethane resin may be copolymerized with dimethylol propionic acid, dimethylol butanoic acid, bis-(2-hydroxyethyl)propionic acid, bis-(2-hydroxyethyl)butanoic acid, etc.

Meanwhile, the carboxyl group thus introduced may be neutralized with a neutralizing agent. As the neutralizing agent, there may be optionally used ordinary neutralizing agents. Examples of the preferred neutralizing agent include organic amines such as ethylamine, trimethylamine, triethylamine, triisopropylamine, triethanol amine, triisopropanol amine, morpholine and N-methyl morpholine. As the neutralizing agent, there may also be mentioned inorganic alkalis such as sodium hydroxide and potassium hydroxide, and ammonia. Among these neutralizing agents, in order to enhance a weather resistance and a water resistance of the resulting film obtained after being dried, more preferred are those having a high volatility which are readily dissociated by action of heat, and amino alcohol capable of reacting with a polyisocyanate curing agent.

When using such a polyurethane resin, the carboxyl group thereof from which the neutralizing agent is removed in the drying step after the coating step may be used as a crosslinking reaction site which can be reacted with other crosslinking agents. As a result, the above-described urethane resin is excellent in stability when preserved in the form of a solution before being coated, and further the coating layer obtained therefrom can be further improved in durability, solvent resistance, water resistance, anti-blocking property, etc.

When introducing a quaternary ammonium group into the urethane resin to impart a cationic property thereto, a tertiary amino group is introduced upon the stage of synthesis of a urethane prepolymer, and the thus introduced tertiary amino group is neutralized with an acid or quaternarized with a quaternarizing agent to disperse the urethane resin in water, thereby obtaining a cationic aqueous urethane resin. The tertiary amino group may be introduced, for example, by using a chain extender having a tertiary amino group. Specific examples of the chain extender include N-alkyl dialkanol amines such as N-methyl diethanol amine and N-ethyl diethanol amine; N-alkyl diaminoalkyl amines such as N-methyl diaminoethyl amine and N-ethyl diaminoethyl amine; and triethanol amine.

The contents of the compounds (A) and (B) in the coating solution are not particularly limited, and may be selected from an appropriate range as far as the aimed properties can be attained. However, when the respective contents are excessively small, it may be difficult to attain the aimed effects. Therefore, it is highly effective that the content of the compound (A) in the coating solution is 5 to 70% by weight and preferably 10 to 40% by weight based on a total weight of solid components in the coating solution. Also, it is highly effective that the content of the urethane resin (B) in the coating solution is 10 to 80% by weight and preferably 10 to 70% by weight based on a total weight of solid components in the coating solution.

In the present invention, as the crosslinking agent (C), there may be used at least one crosslinking agent selected from the group consisting of conventionally known crosslinking agents such as isocyanate compounds other than those belonging to the above compound (A), oxazoline compounds, epoxy compounds, melamine compounds, carbodiimide compounds, alkoxysilane compounds, silane coupling agents and organic metal complexes. From the viewpoint of a good weather-resistant bonding property, as the crosslinking agent (C), there is preferably used at least one crosslinking agent selected from the group consisting of oxazoline compounds, epoxy compounds, melamine compounds and carbodiimide compounds.

The oxazoline compound means a compound comprising an oxazoline group in a molecule thereof, in particular, a polymer comprising an oxazoline group in a molecule thereof. The polymer may be produced by polymerizing an addition-polymerizable oxazoline group-containing monomer solely or polymerizing the addition-polymerizable oxazoline group-containing monomer with other monomers. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These addition-polymerizable oxazoline group-containing monomers may be used alone or in the form of a mixture of any two or more thereof. Among these addition-polymerizable oxazoline group-containing monomers, 2-isopropenyl-2-oxazoline is preferred because of good industrial availability. The other monomers are not particularly limited as long as they are capable of being copolymerized with the addition-polymerizable oxazoline group-containing monomer. Examples of the other monomers include (meth)acrylic acid esters such as alkyl acrylates and alkyl methacrylates (in which the alkyl group may be methyl, ethyl, n-propyl, isopropyl, n-butyl, isobutyl, t-butyl, 2-ethylhexyl or cyclohexyl); unsaturated carboxylic acids such as acrylic acid, methacrylic acid, itaconic acid, maleic acid, fumaric acid, crotonic acid, styrenesulfonic acid and salts of these acids (such as sodium salts, potassium salts, ammonium salts and tertiary amine salts); unsaturated nitriles such as acrylonitrile and methacrylonitrile; unsaturated amides such as acrylamide, methacrylamide, N-alkyl acrylamide, N-alkyl methacrylamide, N,N-dialkyl acrylamide and N,N-dialkyl methacrylamide (in which the alkyl group may be methyl, ethyl, n-propyl, isopropyl, n-butyl, isobutyl, t-butyl, 2-ethylhexyl or cyclohexyl); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride, vinylidene chloride and vinyl fluoride; and α,β-unsaturated aromatic monomers such as styrene and α-methyl styrene. These monomers may be used alone or in combination of any two or more thereof.

In particular, the oxazoline group-containing polymer is preferably in the form of a polymer comprising an oxazoline group in a side chain thereof. Such a polymer may be readily produced by polymerizing the addition-polymerizable oxazoline group-containing monomer with the other monomers. As an example of a commercially available product of the oxazoline compound produced using an acrylic monomer as the other monomer, there may be mentioned "EPOCROSS WS-500" and "EPOCROSS WS-300" both produced by Nippon Shokubai Co., Ltd., which are a polymer-type crosslinking agent prepared by adding an oxazoline group as a branched chain to an acrylic resin, etc.

As the epoxy compound, there may be used a polyepoxy compound, a diepoxy compound, a glycidyl amine compound, etc. Specific examples of the polyepoxy compound include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylol propane polyglycidyl ether. Specific examples of the diepoxy compound include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Specific examples of the monoepoxy compound include allyl glycidyl ether, 2-ethylhexyl glycidyl ether and phenyl glycidyl ether. Specific examples of the glycidyl amine compounds include N,N,N',N'-tetraglycidyl-m-xylylenediamine and 1,3-bis(N,N-diglycidylamino)cyclohexane.

In particular, among these epoxy compounds, preferred are polyfunctional epoxy compounds, and more preferred are polyfunctional epoxy compound having at least two glycidyl ether structures. As an example of a commercially available product of the polyfunctional epoxy compound, there may be mentioned "DECONAL EX-521" produced by Nagase Chemtex Co., Ltd., as a polyglycerol polyglycidyl ether, etc.

The melamine compound used in the present invention is not particularly limited. In the present invention, as the melamine compound, there may be used melamine, methylolated melamine derivatives obtained by condensation reaction between melamine and formaldehyde, partially or completely etherified melamine compounds obtained by reacting a methylolated melamine and a lower alcohol, and mixtures of these compounds.

In addition, the melamine compound may be used in the form of a monomer, a condensed product constituted from a dimer or higher polymer, or a mixture thereof. Examples of the lower alcohol used for the above etherification include methyl alcohol, ethyl alcohol, isopropyl alcohol, n-butanol and isobutanol. The melamine compound may comprise a functional group such as an imino group, a methylol group and an alkoxymethyl group such as a methoxymethyl group and a butoxymethyl group in a molecule thereof. Examples of the melamine compound having the above functional group include imino group-type methylated melamine resins, methylol group-type melamine resins, methylol group-type methylated melamine resins and complete alkyl-type methylated melamine resins. Among these melamine compounds, preferred are methylol group-type methylated melamine resins. Examples of commercially available products of the methylol group-type methylated melamine resins include "BECKAMINE J-101" produced by DIC Corp..

The carbodiimide compound used in the present invention means a compound having two or more carbodiimide groups (-N=C=N-) in a molecule thereof. The carbodiimide compound may be produced from an organic polyisocyanate and especially preferably an organic diisocyanate as a main synthesis raw material, for example, as described in Japanese Patent Application Laid-Open (KOKAI) No. 10-316930(1998) or Japanese Patent Application Laid-Open (KOKAI) No. 11-140164(1999). As the diisocyanates, there may be used one or more diisocyanates selected from the group consisting of hexamethylene diisocyanate (HDI), hydrogenated xylylene diisocyanate (H6XDI), xylylene diisocyanate (XDI), 2,2,4-trimethyl hexamethylene diisocyanate (TMHDI), 1,12-diisocyanate dodecane (DDI), norbornane diisocyanate (NBDI), 2,4-bis-(8-isocyanato-octyl)-1,3-dioctyl cyclobutane (OCDI), 4,4'-dicyclohexyl methane diisocyanate (HMDI), tetramethyl xylylene diisocyanate (TMXDI) and isophorone diisocyanate (IPDI). The carbodiimide compound has an end-capping structure in which a terminal isocyanate group is capped with a hydrophilic group which is obtained by subjecting a diisocyanate to decarboxylation condensation reaction.

In particular, hydrophilic group-containing carbodiimide resins obtained by modifying a carbodiimide resin with a hydrophilic group-containing compound are preferably used. Examples of the modifying agent include polyalkyleneoxides such as PEG (polyethylene glycol) and PPG (polypropylene glycol). Examples of commercially available products of the hydrophilic group-containing carbodiimide resins include "CARBODILITE SV-02", "CARBODILITE V-02", "CARBODILITE V-02-L2" and "CARBODILITE V-04" which are in the form of an aqueous solution having an effective ingredient concentration of 40% by mass, and "CARBODILITE E-01", "CARBODILITE E-02", "CARBODILITE E-03A" and "CARBODILITE E-04" which are in the form of a water dispersion having an effective ingredient concentration of 40% by mass, all produced by Nisshinbo Co., Ltd. These carbodiimide compounds may be used alone or in combination of any two or more thereof.

In the present invention, the content of the crosslinking agent (C) in the coating solution is 10 to 70% by weight and preferably 20 to 60% by weight based on a total weight of solid components in the coating solution. When the content of the crosslinking agent (C) is out of the above-specified range, the resulting coating layer tends to be deteriorated in weather-resistant bonding property.

In the present invention, in order to prevent occurrence of blocking of the film, the coating layer preferably comprises particles in an amount of not less than 3% by weight based on a total weight of the coating layer. When the content of the particles in the coating layer is less than 3% by weight, the effect of preventing occurrence of blocking of the film tends to be insufficient. Also, when the content of the particles in the coating layer is excessively large, although an increased effect of preventing occurrence of blocking of the film is attained, the resulting coating layer tends to be deteriorated in transparency, continuity, film strength and easy-bonding property. More specifically, the content of the particles in the coating layer is more preferably not more than 15% by weight and still more preferably not more than 10% by weight. By incorporating the particles into the coating layer within the above-specified range, it is possible to achieve both of the easy-bonding property and the anti-blocking property.

Examples of the particles include inorganic particles such as particles of silica, alumina and metal oxides, and organic particles such as crosslinked polymer particles. Among these particles, from the standpoints of a good dispersibility in the coating layer and a high transparency of the resulting coating layer, especially preferred are silica particles.

When the particle diameter of the particles is excessively small, it may be difficult to attain the effect of preventing occurrence of blocking of the film. On the other hand, when the particle diameter of the particles is excessively large, the particles tend to fall off from the coating layer. The average particle diameter of the particles is preferably about 1/2 to about 10 times a thickness of the coating layer. Further, when the particle diameter of the particles is excessively large, the resulting coating layer tends to be deteriorated in transparency. The average particle diameter of the particles is preferably not more than 300 nm and more preferably not more than 150 nm. The average particle diameter as described herein means the value determined from a 50% number-average particle diameter of the particles as measured with respect to a dispersion of the particles using "Microtrack UPA" manufactured by Nikkiso Co, Ltd.

In the present invention, the coating solution used for forming the easy-bonding coating layer also comprises the other components than the above-described components, if required. Examples of the other components include various additives such as a surfactant, the other binders, a defoaming agent, a coatability improver, a thickening agent, an antioxidant, an ultraviolet absorber, a foaming agent, a dye and a pigment. These additives may be used alone or in combination of any two or more thereof, if required.

In the present invention, as the method of providing the coating layer onto the polyester film, there may be used conventionally known coating techniques as described, for example, in Yuji HARAZAKI, "Coating Methods", Maki-shoten, 1979. Specific examples of the coating techniques include those techniques using an air doctor coater, a blade coater, a rod coater, a knife coater, a squeeze coater, a dip coater, a reverse roll coater, a transfer roll coater, a gravure coater, a kiss roll coater, a cast coater, a spray coater, a curtain coater, a calender coater, an extrusion coater, a bar coater.

Meanwhile, in order to improve coatability and adhesion of a coating agent onto the polyester film, the polyester film may be subjected to chemical treatment, corona discharge treatment, plasma treatment, etc., before applying the coating agent thereto.

The coating amount of the coating layer provided on the polyester film is usually 0.002 to 1.0 g/m², preferably 0.005 to 0.5 g/m² and more preferably 0.01 to 0.2 g/m² as measured with respect to the finally obtained coating film. When the coating amount of the coating layer is less than 0.002 g/m², the resulting coating layer tends to be insufficient in bonding property. When the coating amount of the coating layer is more than 1.0 g/m², the resulting coating layer tends to be deteriorated in appearance and transparency, and the obtained film tends to suffer from blocking or increase in production costs.

### EXAMPLES

The present invention is described in more detail below by Examples. However, these Examples are only illustrative and not intended to limit the present invention thereto, and various modifications and changes are involved in the scope of the present invention unless they depart therefrom. Meanwhile, the measuring and evaluating methods used in the following Examples and Comparative Examples are as follows.

### (1) Bonding property:

The following active energy ray-curable resin composition was applied on a coating layer formed on a polyester film such that a thickness of a coating resin layer of the curable resin composition after cured was 3 µm, and then an ultraviolet ray was irradiated thereover from a high-pressure mercury lamp using an ultraviolet irradiation apparatus "UVC-402" manufactured by Ushio Inc., at an irradiation intensity of 160 W/cm, an irradiation distance of 100 mm and a conveyer speed of 3 m/min to cure the active energy ray-curable resin composition, thereby obtaining a laminated film having a layer structure of <polyester film/easy-bonding coating layer/active energy ray-cured resin layer>.

The active energy ray-cured resin layer in the resulting laminated film was subjected to cross-cutting at intervals of 1 cm in width to form 100 cross-cuts thereon. A "Cellotape" (registered trademark) was attached onto the thus cross-cut active energy ray-cured resin layer, and then the film was subjected to rapid peel test to evaluate adhesion between the layers of the film based on an area of the active energy ray-cured resin layer peeled off. The evaluation ratings are as follows.
5: 0 ≤ number of cross-cuts peeled ≤ 10
4: 11 ≤ number of cross-cuts peeled ≤ 20

3: 21 ≤ number of cross-cuts peeled ≤ 40
2: 41 ≤ number of cross-cuts peeled ≤ 80
1: 81 ≤ number of cross-cuts peeled

Active energy ray-curable resin composition:
Composition comprising 70 parts by weight of "KAYARAD DPHA" produced by Nippon Kayaku Co., Ltd., 30 parts by weight of "KAYARAD R128H" produced by Nippon Kayaku Co., Ltd., and 5 parts by weight of "IRGACURE 651" produced by Ciba Specialty Chemicals Corp.

### (2) Weather-resistant bonding property:

The laminated film obtained by the same method as defined in the above (1) was attached onto a glass plate such that a surface of the polyester film of the laminated film faced to the glass plate. The glass plate attached with the laminated film was suspended in a container filled with boiling water such that the active energy ray-cured resin layer was faced downwardly. Thus, the active energy ray-cured resin layer was exposed to water vapor for 5 min to apply a wet heat load thereto, and then an ultraviolet ray was irradiated thereover from a high-pressure mercury lamp using an ultraviolet irradiation apparatus "UVC-402" at an irradiation intensity of 160 W/cm, an irradiation distance of 100 mm and a conveyer speed of 1 m/min.

A set of the above procedures were alternately conducted 7 times. Thereafter, the active energy ray-cured resin layer in the resulting laminated film was subjected to cross-cutting at intervals of 1 cm in width to form 100 cross-cuts thereon. A "Cellotape" (registered trademark) was attached onto the thus cross-cut active energy ray-cured resin layer, and then the film was subjected to rapid peel test to evaluate adhesion between the layers of the film based on an area of the active energy ray-cured resin layer peeled off. The evaluation ratings are the same as used in the above (1).

The polyester raw materials used in the following Examples and Comparative Examples are as follows.
(Polyester 1): Polyethylene terephthalate comprising substantially no particles and having an intrinsic viscosity of 0.66.
(Polyester 2): Polyethylene terephthalate comprising amorphous silica particles having an average particle diameter of 2.5 µm in an amount of 0.6 part by weight and having an intrinsic viscosity of 0.66.

The following components were used in a coating composition. The "part(s)" used hereunder represents a weight ratio in terms of a resin solid content.

### (UA) :

Blocked isocyanate compound produced from 312.5 parts of a trimer of hexamethylene diisocyanate and 55.4 parts of methoxy polyethylene glycol having a number-average molecular weight of 700 which comprises a urethane bond and a terminal isocyanate group in a molecule thereof and in which the isocyanate group is blocked with MEK oxime.

However, the surface of the above compound was coated with a urethane resin which was obtained by neutralizing a prepolymer produced from 80 parts of isophorone diisocyanate, 20.2 parts of a trimer of hexamethylene diisocyanate, 229 parts of polyhexamethylene carbonate having a number-average molecular weight of 1000, 2.6 parts of trimethylol propane and 16.1 parts of dimethylol propionic acid with triethylamine, and then subjecting the neutralized product to chain extension reaction using diethylene triamine to prepare particles having a core/shell structure.

### (UB1) :

Water dispersion of a polyurethane resin which was obtained by neutralizing a prepolymer produced from 37.7 parts of isophorone diisocyanate, 56.2 parts of polytetramethylene glycol having a number-average molecular weight of 432 and 5.4 parts of dimethylol propionic acid with triethylamine, and then subjecting the neutralized product to chain extension reaction using isophorone diamine, and had Tg of -20°C.

### (UB2):

Water dispersion of a polyurethane resin which was obtained by neutralizing a prepolymer produced from 45.1 parts of 4,4'-dicyclohexylmethane diisocyanate, 140 parts of terminal OH-modified polyhexamethylene carbonate having a number-average molecular weight of 2000, 55 parts of polyethylene glycol having a number-average molecular weight of 600 and 1.5 parts of dimethylol propionic acid with triethylamine, and then subjecting the neutralized product to chain extension reaction using isophorone diamine, and had Tg of -31°C.

### (UB3):

Water dispersion of a polyurethane resin which was obtained by reacting a prepolymer produced from 78.7 parts of 4,4'-dicyclohexylmethane diisocyanate, 570 parts of terminal OH-modified polyhexamethylene carbonate having a number-average molecular weight of 1000 and 15.5 parts of N-methyl-N,N-diethanol amine with dimethyl sulfate, and had Tg of -20°C.

### (A1) :

Acrylic resin "PRIMAL HA-16" (produced by Rohm & Haas Japan, K.K.).

### (F1) :

Water dispersion of a silica sol having an average particle diameter of 0.07 µm.

### (C1) :

Polymer-type crosslinking agent "EPOCROSS WS-500" (produced by Nippon Shokubai Co., Ltd.) in which an oxazoline group is bonded as a branched chain to an acrylic resin.

### (C2) :

Polymer-type crosslinking agent "EPOCROSS WS-300" (produced by Nippon Shokubai Co., Ltd.) in which an oxazoline group is bonded as a branched chain to an acrylic resin.

### (C3) :

Glycidyl ether-containing polyfunctional epoxy compound "DECONAL EX-521" (produced by Nagase Chemtex Co., Ltd.).

### (C4):

Methoxymethylol melamine "BECKAMINE J-101" (produced by DIC Corp.).

### (C5) :

Aqueous solution of a carbodiimide compound "CARBODILITE SV-02" (produced by Nisshinbo Co., Ltd.).

### Reference Examples 1 to 10 and Comparative Examples 1 to 5:

The polyester 1 and the polyester 2 were blended with each other at a weight ratio of 95/5, and fully dried. Then, the resulting blended mixture was heated and melted at a temperature of 280 to 300°C, and extruded into a sheet shape through a T-die, and adhered onto a cooling drum having a mirror surface controlled to a temperature of 40 to 50°C by an electrostatic adhesion method to cool and solidify the thus extruded sheet on the cooling drum, thereby obtaining an unstretched polyethylene terephthalate film. The resulting film was passed through a group of heating rolls heated to 85°C to stretch the film in a longitudinal direction thereof at a stretch ratio of 3.7 times, thereby obtaining a monoaxially oriented film. One surface of the thus obtained monoaxially oriented film was coated with the coating composition shown in Table 1 below. Next, the thus coated film was introduced into a tenter stretching machine and stretched at 100°C at a stretch ratio of 4.0 times in a width direction thereof while drying the coating composition applied thereto by a heat generated in the tenter. The resulting film was further heat-treated at 230°C, thereby obtaining a 100 µm-thick biaxially oriented polyethylene terephthalate film provided thereon with a coating layer with a coating amount of 0.04 g/m². Properties of the resulting film are also shown in Table 1.

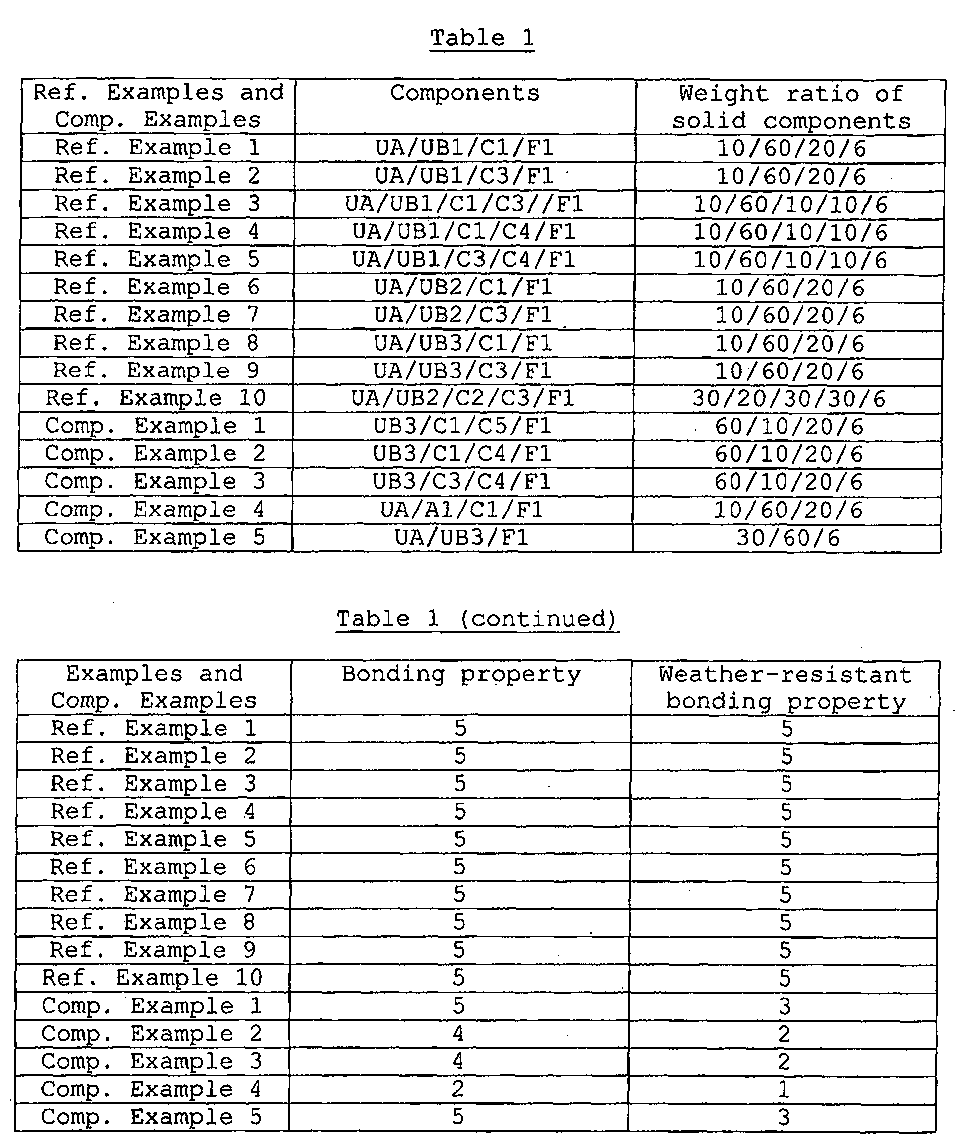

### INDUSTRIAL APPLICABILITY

The film of the present invention can be suitably used as a biaxially stretched polyester film in the outdoor applications requiring excellent bonding property and weather-resistant bonding property.

## Claims

1. A laminated polyester film comprising a polyester film and a coating layer which is formed of a coating solution comprising (A) a compound having an isocyanate-based reactive group and a urethane bond, (B) a urethane resin and (C) at least one crosslinking agent,
wherein compound (A) is the core of particles having a core/shell structure whose outside surface is covered with the urethane resin (B) as shell,
wherein contents of the compound (A), the urethane resin (B) and the crosslinking agent (C) in the coating solution are 5 to 70% by weight, 10 to 80% by weight and 10 to 70% by weight, respectively, based on a total solid content of the coating solution,
wherein an isocyanate-based reactive group means an unreacted isocyanate group at a terminal end of the compound (A) or a terminal isocyanate group protected with a blocking agent,
wherein the coating solution is in the form of a water dispersion,
wherein compound (A) is a urethane resin produced by reacting a polyol with an excessive amount of polyisocyanate which has an isocyanate group at a terminal end thereof, wherein the urethane resin (B) is synthesized from a polyisocyanate component, a polyol component and a chain extender being a diamine or a polyamine, has a tetra- to deca-methylene structure in a skeletal structure thereof and has a glass transition point of not higher than 10°C, wherein the urethane resin (B) is of the self-emulsifiable type and comprises in the skeleton of the urethane resin a nonionic hydrophilic group or an ionic group,
wherein the nonionic hydrophilic group is a ethylenoxide chain and the ionic group is selected from a carboxyl group, sulfonic acid group, phosphoric acid group and a quaternary ammonium group.

2. A laminated polyester film according to claim 1,
wherein the crosslinking agent (C) is selected from the group consisting of an oxazoline compound, an epoxy compound, a melamine compound and a carbodiimide compound.

3. A laminated polyester film according to claim 2,
wherein the oxazoline compound is a polymer having an oxazoline group in a side chain thereof.

4. A laminated polyester film according to claim 3,
wherein the oxazoline group-containing polymer is produced by polymerizing an addition-polymerizable oxazoline group-containing monomer with an other monomer.

5. A laminated polyester film according to claim 4,
wherein the other monomer is an acrylic monomer.

6. A laminated polyester film according to claim 2,
wherein the epoxy compound is a polyfunctional epoxy compound.

7. A laminated polyester film according to claim 6,
wherein the polyfunctional epoxy compound is a compound having at least two glycidyl ether structures.

8. A laminated polyester film according to claim 7,
wherein the compound having at least two glycidyl ether structures is polyglycerol polyglycidyl ether.

9. A laminated polyester film according to claim 2,
wherein the melamine compound is a methylol group type methylated melamine resin.

10. A laminated polyester film according to claim 2,
wherein the carbodiimide compound is a hydrophilic group-containing carbodiimide resin.

11. A laminated polyester film according to any one of claims 1 to 10, wherein the coating solution further comprises a surfactant, binders, a defoaming agent, a coatability improver, a thickening agent, an antioxidant, an ultraviolet absorber, a foaming agent, a dye and a pigment or a mixture of any two or more thereof.

## Patentansprüche

1. Laminierte Polyesterfolie, umfassend eine Polyesterfolie und eine Überzugsschicht, welche aus einer Beschichtungslösung gebildet ist, umfassend (A) eine Verbindung mit einer reaktiven Gruppe auf Isocyanatbasis und einer Urethanbindung, (B) ein Urethanharz und (C) mindestens ein Vernetzungsmittel,
wobei Verbindung (A) der Kern von Teilchen mit einer Kern/Mantel-Struktur ist, deren Außenoberfläche mit dem Urethanharz (B) als Mantel bedeckt ist,
wobei Gehalte der Verbindung (A), des Urethanharzes (B) und des Vernetzungsmittels (C) in der Beschichtungslösung 5 bis 70 Gew.-%, 10 bis 80 Gew.-% bzw. 10 bis 70 Gew.-% sind, bezogen auf den Gesamtfeststoffgehalt der Beschichtungslösung,
wobei eine reaktive Gruppe auf Isocyanatbasis eine unreagierte Isocyanatgruppe an einem terminalen Ende der Verbindung (A) oder eine terminale Isocyanatgruppe, die mit einem Blockierungsmittel geschützt ist, bedeutet,
wobei die Beschichtungslösung in Form einer Wasserdispersion vorliegt,
wobei Verbindung (A) ein Urethanharz ist, hergestellt durch Umsetzen eines Polyols mit einer überschüssigen Menge an Polyisocyanat, das eine Isocyanatgruppe an einem terminalen Ende davon aufweist, wobei das Urethanharz (B) synthetisiert ist aus einer Polyisocyanatkomponente, einer Polyolkomponente und einem Kettenverlängerer, bei dem es sich um ein Diamin oder ein Polyamin handelt, eine Tetra- bis Deka-Methylenstruktur in einer Grundgerüststruktur hiervon und einen Glasübergangspunkt von nicht höher als 10 °C aufweist,
wobei das Urethanharz (B) vom selbst-emulgierbaren Typ ist und im Grundgerüst des Urethanharzes eine nichtionische hydrophile Gruppe oder eine ionische Gruppe umfasst, wobei die nichtionische hydrophile Gruppe eine Ethylenoxidkette ist und die ionische Gruppe aus einer Carboxylgruppe, Sulfonsäuregruppe, Phosphorsäuregruppe und einer quaternären Ammoniumgruppe gewählt ist.

2. Laminierte Polyesterfolie nach Anspruch 1, wobei das Vernetzungsmittel (C) aus der Gruppe gewählt ist, bestehend aus einer Oxazolinverbindung, einer Epoxyverbindung, einer Melaminverbindung und einer Carbodiimidverbindung.

3. Laminierte Polyesterfolie nach Anspruch 2, wobei die Oxazolinverbindung ein Polymer mit einer Oxazolingruppe in einer Seitenkette hiervon ist.

4. Laminierte Polyesterfolie nach Anspruch 3, wobei das Oxazolingruppen enthaltende Polymer hergestellt wird durch Polymerisieren eines additionspolymerisierbaren, Oxazolingruppen enthaltenden Monomers mit einem anderen Monomer.

5. Laminierte Polyesterfolie nach Anspruch 4, wobei das andere Monomer ein Acrylmonomer ist.

6. Laminierte Polyesterfolie nach Anspruch 2, wobei die Epoxyverbindung eine polyfunktionelle Epoxyverbindung ist.

7. Laminierte Polyesterfolie nach Anspruch 6, wobei die polyfunktionelle Epoxyverbindung eine Verbindung mit mindestens zwei Glycidyletherstrukturen ist.

8. Laminierte Polyesterfolie nach Anspruch 7, wobei die Verbindung mit mindestens zwei Glycidyletherstrukturen Polyglycerolpolyglycidylether ist.

9. Laminierte Polyesterfolie nach Anspruch 2, wobei die Melaminverbindung ein methyliertes Melaminharz vom Methylolgruppen-Typ ist.

10. Laminierte Polyesterfolie nach Anspruch 2, wobei die Carbodiimidverbindung ein eine hydrophile Gruppe enthaltendes Carbodiimindharz ist.

11. Laminierte Polyesterfolie nach irgendeinem der Ansprüche 1 bis 10, wobei die Beschichtungslösung weiter umfasst ein Tensid, Bindemittel, ein Entschäumungsmittel, einen Beschichtbarkeitsverbesserer, ein Verdickungsmittel, ein Antioxidans, einen Ultraviolett-Absorber, ein Schäumungsmittel, einen Farbstoff und ein Pigment oder eine Mischung aus beliebigen zwei oder mehreren hiervon.

## Revendications

1. Un film de polyester stratifié comprenant un film de polyester et une couche de revêtement qui est formée d'une solution de revêtement comprenant (A) un composé ayant un groupe réactif à base d'isocyanate et une liaison uréthane, (B) une résine d'uréthane, et (C) moins un agent de réticulation,
dans lequel le composé (A) est le noyau de particules ayant une structure noyau / enveloppe, la surface extérieure desquelles est recouverte avec la résine d'uréthane (B) en tant qu'enveloppe,
dans lequel les contenus du composé (A), de la résine d'uréthane (B), et de l'agent de réticulation (C) dans la solution de revêtement sont respectivement de 5 à 70 % en poids, de 10 à 80 % en poids et de 10 à 70 % en poids, sur la base du contenu de solides totale dans la solution de revêtement, par rapport à une teneur totale en solides de la solution de revêtement,
dans lequel un groupe réactif à base d'isocyanate signifie un groupe isocyanate n'ayant pas réagi à une extrémité du composé (A) ou un groupe isocyanate terminal protégé par un agent de blocage,
dans lequel la solution de revêtement est sous la forme d'une solution aqueuse,
dans lequel le composé (A) est une résine d'uréthane fabriquée en réagissant un polyol avec une quantité excessive de polyisocyanate ayant un groupe isocyanate a une de ses extrémités,
dans lequel la résine d'uréthane (B) est synthétisée d'un composant de polyisocyanate, d'un composant de polyol et d'un agent d'allongement de chaîne, qui est un diamine ou un polyamine, a la structure du déca-méthylène dans une structure de squelette de celle-ci et a un point de transition vitreuse non supérieur à 10 °C,
dans lequel la résine d'uréthane (B) est du type auto-émulsionnable et comprend un groupe hydrophile non ionique ou un groupe ionique dans le squelette de résine d'uréthane,
dans lequel le groupe hydrophile non ionique est une chaîne d'oxyde d'éthylène et le groupe ionique est sélectionné d'un groupe carboxyle, d'un groupe acide sulfonique, d'un groupe acide phosphorique et d'un groupe ammonium quaternaire.

2. Un film de polyester stratifié selon la revendication 1,
dans lequel l'agent de réticulation (C) est choisi parmi le groupe constitué par un composé d'oxazoline, un composé époxy, un composé de mélamine et un composé de carbodiimide.

3. Un film de polyester stratifié selon la revendication 2, dans lequel le composé d'oxazoline est un polymère ayant un groupe oxazoline dans une chaîne latérale de celui-ci.

4. Un film de polyester stratifié selon la revendication 3, dans lequel le polymère contenant un groupe oxazoline est produit par polymérisation d'un monomère contenant un groupe oxazoline polymérisable par addition avec un autre monomère.

5. Un film de polyester stratifié selon la revendication 4, dans lequel l'autre monomère est un monomère acrylique.

6. Un film de polyester stratifié selon la revendication 2, dans lequel le composé époxy est un composé époxy polyfonctionnel.

7. Un film de polyester stratifié selon la revendication 6, dans lequel le composé époxy polyfonctionnel est un composé ayant au moins deux structures d'éther glycidylique.

8. Un film de polyester stratifié selon la revendication 7, dans lequel le composé ayant au moins deux structures d'éther glycidylique est l'éther polyglycidylique de polyglycérol.

9. Un film de polyester stratifié selon la revendication 2, dans lequel le composé de mélamine est une résine de mélamine méthylée type groupe méthylol.

10. Un film de polyester stratifié selon la revendication 2, dans lequel le composé de carbodiimide est une résine de carbodiimide contenant un groupe hydrophile.

11. Un film de polyester stratifié selon l'une quelconque des revendications 1 à 10, dans lequel la solution de revêtement en plus comprend un agent tensioactif, des liants, un agent anti-mousse, un agent améliorant la capacité de revêtement, un agent épaississant, un antioxydant, un absorbeur d'ultraviolet, un agent moussant, un colorant et un pigment ou un mélange de deux ou plusieurs quelconques de ceux-ci.
